# EUROPEAN PATENT APPLICATION

(11) **EP 4 793 921 A1**
(43) Date of publication of application: **19.08.2026**
(21) Application number: 26158435.3
(22) Date of filing: 13.02.2026
(51) Int. Cl.: G08G 1/01, H04W 4/38, H04W 4/44

(54) **MONITORING MOVEMENT OF VEHICLES OR PEOPLE**

(30) Priority: 13.02.2025 IT 202500002721
(71) Applicant: Vodafone Group Services Limited, Newbury RG14 2FN (GB)
(72) Inventor: SCALONE, Gianpaolo Angelo, London, W2 6BY (GB); SCARIANO, Carmelo, London, W2 6BY (GB); MOURAD-OKBA, May, London, W2 6BY (GB); SHACKLADY, Andrew, London, W2 6BY (GB); SAMMUT, Anthony, London, W2 6BY (GB)
(74) Representative: Boult Wade Tennant LLP

(57) **Abstract**

A method for monitoring movement of vehicles or people within a geographical area. At an edge node of a cellular network, movement behaviour data received at the edge node from each mobile device of a plurality of mobile devices located within the geographical area is aggregated. Each mobile device is associated with a vehicle and/or a person and the edge node is for implementation of multi-access edge computing (MEC). Then, at the edge node, the aggregated movement behaviour data is analysed to identify any one or more atypical movement behaviour. If one or more atypical movement behaviour is identified, then the edge node reports the one or more atypical movement behaviour to a monitoring entity.

## Description

### Field of the Disclosure

A system and method for monitoring movement of entities (people or vehicles) within a monitored area. The system and method leverages computational power at a Multi-Access Edge Computing node of a telecommunications network in order to aggregate and then analyse movement data from a plurality of mobile devices, where each mobile device is associated with an entity (being a person or vehicle). The system and method allow atypical movement behaviour, which could cause or be the result of disruption in the monitored area, to be identified and reported to a monitoring entity. In an example, the system and method may be used to monitor a transportation system or traffic network.

### Background to the Disclosure

Where there is movement of a number of people (for instance, within a building) or vehicles (for instance, on a highway) within a constricted or controlled geographical area, a small change to the dynamics of the geographical area can cause change or disruption to the flow or movement of people or traffic. Such disruption can cause inconvenience, but may also pose safety concerns. Rapid detection and early alert of such changes or disruption to the flow or movement of entities through the area is crucial for preventing accidents, responding to incidents, and managing crowds or traffic effectively.

With respect to monitoring of traffic systems or the road network, currently, Cooperative Intelligent Transport Systems and Services (C-ITS) provide systems in which a road vehicle can directly signal (with status and location) to emergency services when the vehicle is involved in a safety incident. However, when an incident involves an unconnected vehicle (i.e. without C-ITS capability), or a vehicle with electrical failure (i.e. preventing C-ITS capability), or if incidents occur that are not directly connected to a particular vehicle (for instance, a blockage of a road by a tree or other item) then no report of the incident is sent via C-ITS. Other existing systems for monitoring transport may rely on witness reports of incidents, but these witness reports are often not reliable, and may not be timely received.

As such, there is a desire for a system and method for monitoring movement of people and traffic, in order to achieve quick and reliable detection of disruption.

### Summary of the Disclosure

The present disclosure considers a method for monitoring movement of vehicles or people within a geographical area. In a particular implementation, the method is for monitoring movement of vehicles within a geographical area, and acts to monitor the movement of mobile devices associated with (or embedded within) the vehicle itself or associated with a person travelling within a vehicle.

The method is executed at an edge node used for implementation of multi-access edge computing (MEC). The method requires receipt of movement behaviour data at an edge node from a plurality of mobile devices located in a monitored geographical area, aggregation of the movement behaviour data and then analysis of the movement behaviour data to identify atypical movement behaviours. Preferably, the monitored geographical area is divided into segments, wherein the size and area for each segment may be adapted dynamically in view of changing input parameters and identification (or otherwise) of atypical movement behaviour from the method. The aggregation and analysis of movement behaviour data is then undertaken for each segment. The method may also take into account various inputs in analysing the aggregated movement behaviour data for each segment, including a set of characteristics (being parameters characterising the regions of the geographical area coinciding with a given segment such as weather at the location, time of day, mobile device density etc.). The analysis may employ an Al-based (machine learning) model to identify atypical movement behaviour.

Beneficially, the disclosed method utilises the power of edge computing, specifically Multi-Access Edge Computing (MEC), to implement complex machine learning models for monitoring of a geographical area. The inputs and parameters to the machine learning model may adapt dynamically in response to the changing circumstances at regions of the geographical area. The disclosed system is for monitoring movement dynamics and patterns representative of a group of vehicles or people (each associated with a mobile device), in order to identify movement behaviours that are outside of 'expected' movement behaviours for a particular location. Identification of atypical movement behaviours can be reported to a monitoring entity, to allow deployment of emergency services or other personnel to the location of the atypical movement behaviour, or to initiate action to control or mitigate against the cause of the atypical movement behaviour.

In an example, the method can be applied to monitor a traffic system (i.e. a road or highway network). In this respect, the method monitors the overall patterns of movement of mobile devices associated with vehicles in the traffic system to identify atypical behaviour. The identification of atypical behaviour by the disclosed method is for management of traffic infrastructure, and deployment of safety improvements or emergency services. Applications could range from in-vehicle driver alerts of upcoming obstructions or hazards, to improved control of 'smart motorways' which have dynamic lane controls and speed limits.

It will be understood that the disclosed method is not a real-time collision avoidance system (of the type found in most modern cars), which controls the steering or movement of specific vehicles in order to avoid a known obstacle. Furthermore, the system is also not intended to provide an indication of heavy traffic for navigation purposes (such as is found on many route map systems), which tend to rely on tracking of journey times and self-reporting by users.

In an alternative example, the method could be employed to monitor the movement of people through a space.

In a first aspect there is a method for monitoring movement of vehicles or people within a geographical area, comprising:
aggregating, at an edge node of a cellular network, movement behaviour data received at the edge node from each mobile device of a plurality of mobile devices located within the geographical area, each mobile device being associated with a vehicle and/or a person, the edge node for implementation of multi-access edge computing (MEC);
analysing, at the edge node, the aggregated movement behaviour data to identify any one or more atypical movement behaviour;
if one or more atypical movement behaviour is identified, then reporting, by the edge node to a monitoring entity, the one or more atypical movement behaviour.

In other words, movement behaviour data from a number of mobile devices within a geographical region is received at the edge node of a telecommunications network. Said edge node is a node at the edge of the core network, and can provide computing services to geographically local mobile devices. As such, the movement behaviour data is received at an edge node that is relatively local to the devices from which it was sent, reducing latency in the receipt of such data and allowing analysis in the overall system to be spatially distributed across multiple edge nodes.

A mobile device may be any portable device connected to a telecommunications network, including but not limited to a cell phone or mobile telephone, a tablet or an in-vehicle telecommunications device. Each mobile device is associated with a vehicle and/or a person. For instance, the mobile device may be carried by a user or individual, or be carried in a vehicle (by a user of the vehicle or embedded in a control panel of a vehicle). Each mobile device may be associated with a vehicle or a person travelling within a vehicle. In this way, the mobile device may provide data representative of the movement of its user, and in certain implementations may provide data representative of the movement of a vehicle in which its user is travelling. Depending on circumstance, the mobile device may reflect the movement of a user through a geographical area such as a traffic system or road network, or, in some alternative examples, may reflect the movement of a user through a geographical area such as a shopping mall, a public transport network, or through a crowd (i.e. carried by the user 'on foot').

The geographical area may be an area or region in which the mobile devices are located. Often, the method is used to monitor vehicles within a traffic system (being a system for movement of vehicles therethrough), and so the geographical area may contain the traffic system. In alternative examples where the method is used to monitor movement of people through a given space, then the geographical area may cover a particular system (such as a public transport system), location (such as a shopping mall or railway station) or region (through which a road or highway passes).

The movement behaviour data is recorded and/or measured by each mobile device of a plurality of mobile devices in a geographical area. The movement behaviour data may include a set of measured values for one or more parameters representative of the movement or trajectory of the mobile device, or that allow calculation or interpolation of characteristics of the movement. For instance, the movement behaviour data may include (but is not limited to) speed, direction, acceleration, location and orientation. If the mobile device is embedded in the control of a vehicle, then the movement data may further include (but is not limited to) braking force applied, angle of rotation of a steering device and other vehicle control parameters. **In** some situations, the movement behaviour data may be received from a mobile device in a vehicle-to-network (V2N) message, which is a messaging framework that enables both broadcast and unicast communications to take place between vehicles and a vehicle-to-everything (V2X) management system. In one implementation, the movement behaviour data may be received from a mobile device via a Cooperative Awareness Message (CAM) known within existing intelligent transport systems.

Once received the movement behaviour data is aggregated or grouped (e.g. each parameter of the movement behaviour data may be aggregated or grouped). The movement behaviour data (or more specifically each parameter of the movement behaviour data) may be averaged. In this way, behaviours can be identified that are representative of the group of mobile devices (and their users), rather than reflecting the movement of only a single mobile device (and a single user). This is important because the method looks to identify atypical movement behaviours at a population level, rather than at an individual level, as this indicates a structural or systematic cause for identified atypical movement behaviours (such as a blockage, or an accident). Furthermore, aggregation of the movement behaviour data anonymises movement data received from individual mobile devices (and users).

Once aggregated, the movement behaviour data is analysed. Preferably, the analysis is performed by a machine learning model. The analysis identifies features or patterns in the movement behaviour, and more particularly features or patterns representing atypical movement behaviours. Atypical movement behaviours are those that are unusual and do not conform to the normal behaviours or expected movement (seen at a population level). For instance, atypical behaviour may be indicated by the absence of any data received from a given location in the geographical area, when typically data would be received from one or more mobile device at that location. For instance, this could indicate that users or vehicles associated with the mobile devices are avoiding that location, thereby indicating a blockage in that space. Alternatively or additionally, atypical behaviour may be indicated by a specific feature in the movement behaviour data such as at least one of deceleration, acceleration, change of direction of movement, slow speed of movement, or fast speed of movement. These indications, including a lack of data from certain locations or changes in these parameters, may be used to identify the presence and location of hazards, congestion, inclement weather, or other conditions. For instance, atypical movement behaviour may be indicated by an uncommon overall flow of traffic or unusual route of mobile devices (and their users) through a geographical area.

It will be understood that, initially, atypical movement behaviour could be indicated by one feature in the data (such as a lack of data received from a location that would be expected to contain mobile devices in the geographical area). Then, the atypical movement behaviour could be verified by further analysis of aggregate movement behaviour data received from nearby mobile devices, which may exhibit other atypical features. Due to the aggregation of the movement behaviour data, such atypical movement behaviour is only identified if it is reflected in the movement behaviour data of more than one mobile device (in other words, that it indicates a 'trend' in the movement behaviour amongst the plurality of devices), rather than simply indicating that an individual user of a mobile device is exhibiting uncommon movement behaviour. In this way, use of aggregate movement behaviour data provides a more reliable indicator of atypical movement behaviour than monitoring any single mobile device, not least because it allows identification of the absence of data from certain locations.

If one or more atypical movement behaviour is identified, then it can be reported to a monitoring entity. Said monitoring entity may be a human supervisor or manager of the traffic network, or may be an automated management system. The monitoring entity may be a traffic management system or crowd management system, which may be automated or may provide a display to a human operator to request operator input. The monitoring entity may be cloud based, or at an edge node of the cellular network.

An action may be taken as a result of the report of atypical movement behaviour (for instance, automatically adjusting speed limits shown to road users, or sending emergency services). The method may further comprise initiating an action upon receipt of a report of atypical movement behaviour in the geographical area. The method may further comprise, identifying, by the monitoring entity, at least one action associated with each of the reported one or more atypical movement behaviour, and initiating, by the user entity, the at least one action. **In** other words, an automated monitoring entity may react to the identification of an atypical movement behaviour. For instance, where the method monitors a vehicle traffic system the at least one action may be selected from a group comprising: sending a maintenance support crew (road maintenance or vehicle maintenance), applying a speed restriction in a specified geographical region, sending emergency services, sending a congestion notification to mobile devices within the region atypical movement behaviour is identified. Alternatively, where the method monitors movement of people within a space, the at least one action may be selected from a group comprising: opening a new walkway through the geographical area, opening a new service point or turnstile, sending security staff.

As noted above, an atypical movement behaviour may be any type of behaviour indicating different movement of the mobile device (and by proxy, its user) than compared to a historically 'normal' or an 'expected' behaviour. For instance, an atypical movement behaviour may be identified by a lack of data received from a location or region that would be expected to contain mobile devices in the geographical area. Additionally or alternatively, an atypical movement behaviour may be identified by a reduction in the aggregate (or average) speed of movement of mobile devices in a region of the geographical area than compared to the aggregate (or average) speed of movement of mobile devices in the same approximate location and at the same time of day on other equivalent dates.

In an example, the mobile devices may each be associated with a vehicle on a particular stretch of highway. Initially, an atypical moment behaviour could be identified as a result of a lack of data at locations within the geographical area, but in which vehicles (and their associated mobile devices) would be expected to be found. This may be indicative of, for instance, a blockage on the highway, around which vehicles are diverting to avoid. Instead or in addition, the atypical movement behaviour may be observed as an aggregate large deceleration of the mobile devices and an aggregate movement to an outer lane of the highway. This may be further indicative of an obstruction on an inner lane of the road, causing vehicles to slow and then move out of the way. In a further example, the atypical movement behaviour may be identified because the speed of vehicles (and their associated mobile devices) in the aggregated movement behaviour data is less than would be expected in view of historical movement data and the road speed limit.

Once such atypical behaviours are reported to a monitoring entity, action may be taken to improve safety of vehicles in the region of the atypical movement behaviour (for instance, deploying a lower speed limit on 'smart', network connected road signs and sending emergency services to the portion of the highway). It would be expected that a number of often interconnected atypical movement behaviours could be observed, and it may be that identification of a first atypical movement behaviour at a given location then results in the further analysis of other movement behaviours near that location so as to confirm or explore the atypical movement behaviour.

In a possible alternative implementation of the method, if the geographical area is a railway platform requiring a ticket for entry and the method is used to monitor movement through that space, a reduction in speed in the aggregate movement data of mobile devices through the area may be associated with mechanical failure of a ticket barrier at the entry point. Once such an atypical behaviour is reported to a monitoring entity, action may be taken to improve mobility for people at the location of the atypical movement behaviour (for instance, by sending security staff to direct movement of people through the crowded area).

Prior to the step of aggregating, the method may further comprise:
dividing, at the edge node, the geographical area in which the plurality of mobile devices is located into a plurality of segments, wherein the movement behaviour data received at the edge node from each mobile device of the plurality of mobile devices is associated with a specified one of the plurality of segments;
and wherein the aggregating, analysing and reporting steps comprise:
   aggregating, at the edge node for each segment of the plurality of segments, the movement behaviour data received from each mobile device associated with the segment;
   analysing, at the edge node for each segment of the plurality of segments, the aggregated movement behaviour data to identify any one or more atypical movement behaviour;
   if one or more atypical movement behaviour has been identified in any segment, then for each atypical behaviour identified reporting by the edge node to a monitoring entity the atypical movement behaviour together with an identifier of a region of the geographical area coinciding with the segment in which said atypical movement behaviour was identified.

Here, the geographical area in which the plurality of mobile devices is located (i.e. the monitored area) may be a relatively large area (for instance, a stretch of roadway, or an entire shopping mall). The atypical movement behaviour may only be exhibited by mobile devices within a region of the geographical area (for instance, as a particular junction on the stretch of roadway, or outside a particular shop within the shopping mall). As such, the geographical area is divided into segments (or smaller areas), and then data received at the edge node from each mobile device may be associated with a particular segment. The data for each segment can then be aggregated and analysed separately, to identify atypical movement behaviours in user's movement within a given segment. Segregation of the geographic area into segments allows atypical movement to be more accurately identified, especially in view of the aggregation of data rather than analysis of individual mobile device data, because it avoids the averaging effect that may mask atypical behaviour in one region of a much larger region. Furthermore, segmenting the geographical region allows the location (and in some cases the associated cause) of atypical movement behaviour to be more easily identified, as well as allowing closer monitoring of specific regions of the geographical area in which atypical movement behaviour occurs with higher frequency (i.e. a turnstile in a station, or a junction in a road).

Analysing, at the edge node for each segment of the plurality of segments, the aggregated movement behaviour data to identify any one or more atypical movement behaviour may further comprise analysing, at the edge node for each segment of the plurality of segments, the aggregated movement behaviour data together with a set of characteristics for regions of the geographical area coinciding with the segment and/or aggregated movement behaviour data of one or more segments adjoining the segment to identify any one or more atypical movement behaviour. **In** other words, analysis to identify atypical movement behaviour may take into account the aggregated movement behaviour data for a particular segment, but also certain parameters or characteristics for that segment. The characteristics may include, as an example, one or more of the estimated visibility in the segment, the presence or absence of precipitation in the segment, the presence or absence of (pre-notified) maintenance work in the segment, speed restrictions in the segment, a historical average speed in the segment, identification of previous atypical movement behaviour in the segment, a predetermined risk profile for atypical behaviour in the segment, a density of mobile devices in the segment, a density of mobile devices in the segment and/or a presence or absence of a prearranged event in the segment. The set of characteristics may be retrieved from a database or record (for instance, stored within computer memory accessible to the edge node), received as a measurement at the edge node (for instance, from a sensor at the location of the segment), or received from the core network (for instance, by obtaining information from the internet). The set of characteristics may be updated periodically, so as to change dynamically as movement behaviour data, external data and measured data (from sensors etc.) is received at the edge node. Additionally or alternatively, the analysis may take into account aggregate movement data received at the edge node and associated with other segments close to, in proximity with, or adjoining the present segment. In other words, movement data from mobile devices in neighbouring segments (e.g. slightly preceding or succeeding a segment of a highway) may be taken into account in the analysis, to identify a pattern in the movement behaviour across a small number of segments.

The method may further comprise repeating the dividing, aggregating, analysing and reporting steps. The steps may be repeated, in order to monitor the geographical area for atypical movement behaviour. For each iteration of the steps, the segmentation of the geographical area may be adjusted, and the set of characteristics for regions of the geographical area coinciding with each segment may be changed or updated (for instance, to reflect a change in weather, or the start of a nearby event). In this way, changing movement behaviour can be identified, taking into account changing conditions within the geographical area. Where the method takes place using a machine learning model, it will be understood that the results of the analysis may feedback to update and improve the model.

The size of each segment in the plurality of segments is determined based on previous analysis of the aggregated movement behaviour data to identify any one or more atypical movement behaviour in regions of the geographical area coinciding with or overlapping a given segment and a set of characteristics for said regions of the geographical area coinciding with or overlapping the given segment. In other words, the size and number of segments may be adjusted, in order to increase (or decrease) 'sampling' of regions of the geographical area. The size and number of segments may be adjusted dynamically in order to respond to changes in movement behaviour at different locations. The segment size is analogous to the size of the area 'sampled' for atypical movement behaviour of mobile devices within the segment, and so decreasing the size of a segment (and so increasing the number of segments covering a particular geographical area) can result in more precise and detailed analysis of aggregate movement data in that region. The size of each segment may be determined based on a likelihood of atypical movement behaviour in regions of the geographical area, wherein regions within the geographical area in which the likelihood of atypical movement behaviour is higher are divided into segments of smaller size than regions within the geographical area in which the likelihood of atypical movement behaviour is lower.

The size of each segment may be different, so that the whole of the geographical area may be represented by a range of different size segments in different regions, according to need. Each segment of the plurality of segments may be the same size and/or area or preferably may have two or more sizes or areas. The area of each segment may be dynamically adjusted so that portions of the geographical area containing a higher density of mobile devices are represented by a greater number of segments having a smaller area, for instance.

In an example, the size of the segments covering a particular region of the geographical area may be smaller in view of reduced visibility reported as a characteristic of that region (for instance, due to fog). This gives a more granular view of the change in aggregate movement behaviour, and allows a quicker or more responsive identification of atypical movement behaviour. Alternatively, the segment size at a region of the geographical area could be decreased in view of atypical movement behaviour identified in a previous iteration of the dividing, aggregating, analysing and reporting steps within that region (so, for instance, if atypical movement behaviour has been identified - perhaps due to a traffic collision - then the segment size in that region is decreased to allow more detailed scrutiny of consequent changes in movement behaviour in that location). In a still further example, the segment size could be increased if a geographical area is less busy, and so the density of mobile devices in the geographical area is relatively low. As will be understood, the size of each segment can be adjusted dynamically.

The set of characteristics of a region used to determine the size of a segment may be the same types of characteristics as used to analyse the aggregated movement behaviour to identify atypical movement behaviour, as discussed above. In particular, as noted above, the set of characteristics of a region comprises one or more parameter selected from a group comprising: environmental factors (such as estimated visibility, or the presence or absence of precipitation, temperature, ice indicators, excess heat indicators weather reports); date; time of day; presence or absence of maintenance work; speed restrictions; a historical average speed; identification of previous atypical movement behaviour in the region; a predetermined risk profile for atypical behaviour in the region; a density of mobile devices; and/or presence or absence of a prearranged event. For instance, the risk profile may represent the known risk of accidents or congestion at specific locations (e.g. junctions etc) within a highway system. Some parameters within the set of characteristics may be received or updated by external inputs (i.e. from the internet through the core network), and other parameters may be measured values from sensors at the location of the mobile device (or measured by the mobile device themselves, and reported to the edge node).

Said set of characteristics are associated with a region, area or location within the geographical region, wherein a segment may coincide with, overlap or encompass the region, area or location associated with a given characteristic. As such, each segment (or region) within the geographical area has a set of associated characteristics. The set of associated characteristics may change as the size and arrangement of the segments are changed with each iteration of the 'dividing' step of the method. The same set of characteristics may be used within both the determination of the size of a segment and in the analysis of the aggregated movement data for a given segment.

The method may further comprise, if one or more atypical movement behaviour has been identified in the aggregated movement behaviour data, confirming the presence of atypical movement behaviour by obtaining further movement behaviour data from mobile devices within the segment associated with the identifier, and analysing the further movement behaviour data to confirm or dismiss the presence of atypical movement behaviour. **In** other words, once atypical movement behaviour is identified in the aggregate movement behaviour data (representative of group or population movement) then the movement behaviour of one or more specific mobile device within the plurality of mobile devices may be obtained and analysed in order to provide a better, more discrete knowledge of the movement behaviour and the possible causes and location of atypical movement behaviour.

The movement behaviour data is received at the edge node from each mobile device of the plurality of mobile devices according to a rate policy, and wherein the method further comprises assigning, by the edge node, a rate policy for each mobile device of the plurality of mobile devices. The rate policy determines the regularity or frequency with which a mobile device provides or reports movement behaviour data to the edge note. Thus, the rate policy determines how regularly the movement behaviour data is updated and provided for reanalysis by the edge node.

The rate policy may be modified or adapted to increase the rate of movement behaviour data provided to the edge node where atypical movement behaviour is identified or expected. For example, where atypical movement behaviour has been identified in a region having a group of mobile devices, then the rate policy for that group of mobile devices may be assigned to provided movement behaviour data to the edge node more frequently.

Assigning a rate policy may comprise, at the edge node for each mobile device of the plurality of mobile devices, determining at the edge node a rate policy, and sending the rate policy from the edge node to said mobile device for implementation at the device. Assigning the rate policy for each mobile device of the plurality of mobile devices may be based on one or more of: a categorisation of said mobile device; and/or attributes of the segment in which said mobile device is located. As an example, these attributes could include (but are not limited to) the previous identification of atypical behaviour in the segment, the reporting of a particular characteristic from mobile devices in that segment (i.e. an indication of rain at a location in a segment) or the presence of a high density of mobile devices within a particular segment (so negating the requirement for very regular data to be obtained from every mobile device).

The categorisation of each mobile device may be bestowed or assigned by the edge node, for instance in view of the role of a particular mobile device in previously identified atypical movement behaviour. In an example, the method may further comprise, prior to assigning the rate policy, assigning, by the edge node, the categorisation to each mobile device of the plurality of mobile devices based on previous analysis of the aggregated movement behaviour data to identify any one or more atypical movement behaviour in the segment in which the mobile device is located. The categorisation may include: mobile device exhibiting regular behaviour; mobile device exhibiting queueing behaviour; mobile device exhibiting lead of queue behaviour; mobile device exhibiting body of queue behaviour; mobile device exhibiting tail of queue behaviour. Certain categories may be associated with the assigning of a faster rate policy. For example, if it is identified that a group of mobile devices are stationary and in a queue (for instance, due to a blockage on a road or highway), the majority of the mobile devices in the group may be categorised as 'mobile device exhibiting body of queue behaviour' and the rate policy adjusted so that data is sent to the edge device less frequently (to improve efficiency of the overall system, as no significant change would reported whilst the mobile devices are stationary). However, one or more mobile device at the head or beginning of the queue (or the end of the queue) may be categorised as 'mobile device exhibiting lead of queue behaviour' (or, respectively, 'mobile device exhibiting tail of queue behaviour'). The rate policy at these devices may be assigned to more frequently report movement data, as these devices may be representative of changes in the atypical movement of the group of mobile devices (i.e. representative of the movement of all devices in the queue). Once a mobile device appears to be away from the queue and exhibiting typical movement behaviour, then it may be categorised as 'mobile device exhibiting regular behaviour'. As such, categorisation of mobile devices into roles can give greater efficiency in the system, and prevent unnecessary use of computational power at the edge node to analyse movement data that does not provide significant additional information.

In some cases, the rate policy may be dynamically adjusted by the edge node in cooperation with, or in view of, the segment size. In an example, a rate policy may reduce the rate of return for movement data in a large-sized segment (in which a larger number of mobile devices are located). In another example, a segment may be made to have a small size (to focus on the head of a queue), with the rate policy for mobile devices in that segment being set to provide relatively frequency movement data, whilst a region of a highway behind the head of a queue may be set having a large segment size and a slower rate policy.

Analysing the aggregated movement behaviour data to identify any one or more atypical movement behaviour may comprise using a machine learning model to identify one or more atypical movement behaviour in the aggregated movement behaviour data. The method (in particular the analysis step) may be implemented as a machine learning model or algorithm (in other words, employing artificial intelligence model). The machine learning model may be stored and executed at the edge node, and the machine learning model may be based on any one of deep learning, reinforced or unreinforced machine learning, neural networks, K-means clustering, or regression analysis. The machine learning model may employ a classifier algorithm to classify movement as typical or atypical.

Use of machine learning allows analysis and reanalysis of the movement behaviour in a dynamic way that is responsive to identification of atypical movement behaviour, as well as continuous changes and updates to various parameters within the model (such as segment size and characteristics of regions coinciding with each segment). Use of machine learning allows for the constant re-evaluation of parameters within the method and real-time incorporation of those changes, including modifications in segment size, the characteristics of the segment and the categorisation of different mobile devices. Use of the machine learning model allows for better ability to predict outcomes or make decisions based on the identification of features or patterns in the movement behaviour data received from mobile devices. It also increases the automation of the identification of atypical movement behaviours, and may be used to automate (more intuitively) a responsive action to the identification of said atypical movement behaviours.

The machine learning model may be trained to identify patterns in the aggregated movement behaviour data indicating atypical movement behaviour based on a set of characteristics of one or more region of the geographical area and historical movement behaviour data obtained from mobile devices located in the one or more region (and the classification of that historical movement behaviour data as typical or atypical). **In** other words, training data for the machine learning model may be provided by historical movement data for mobile devices in the same geographical area, or for mobile devices in representative geographical area. Certain more generic movement behaviours (such as slowing down in response to an accident ahead) may be less sensitive to the specific geographical location, and so training data for this type of atypical movement behaviour may be sourced from standard or generic training sets of data. Other training data may be more specific to the geographical location (i.e. historical data showing the effect to movement behaviour of mobile devices associated with cars in the geographical area when heavy rain occurs). As such, the machine learning model may be trained for use in a specific geographic area. It will be understood that the machine learning model may be continually trained and improved based on the ongoing identification of atypical movement behaviour when the presently described method is implemented.

In a further aspect, there is described an edge node for implementation of the method above. In particular, there is an edge node for multi-access edge computing, MEC, in a cellular network, the edge node being configured to:
aggregate movement behaviour data received from each mobile device of a plurality of mobile devices located within a geographical area, each mobile device being associated with a vehicle and/or a person within a traffic system;
analyse the aggregated movement behaviour data to identify any one or more atypical movement behaviour;
wherein if one or more atypical movement behaviour is identified, the edge node is configured to:
   report, to a monitoring entity, the one or more atypical movement behaviour.

It will be understood that the edge node comprises a processor and memory storing computer-executable instructions that, when executed by the processor, cause the server to perform the steps of the method described above. As such, said computer-executable instructions, when executed by the processor, cause the server to: aggregate movement behaviour data received from each mobile device of a plurality of mobile devices located within a geographical area, each mobile device being associated with a vehicle and/or a person within a traffic system; analyse the aggregated movement behaviour data to identify any one or more atypical movement behaviour; and, if one or more atypical movement behaviour is identified, report, to a monitoring entity, the one or more atypical movement behaviour.

The edge node is configured to carry out the steps of the method as described above. As such, it will be understood that the definition and described benefits outlined above for all features common to the method and the edge node equally apply with respect to the edge node.

The edge node (sometimes considered as a gateway node) is a device, server or virtual machine that acts as a gateway between local mobile devices and the rest of the telecommunications network (i.e. the core network). The edge node may be located at the edge of a network, geographically closer to end users, and may serve only a small subsection for mobile devices at a time. The edge node provides distributed computing services, in order to implement multi-access edge computing. Use of edge nodes to implement the describe method offers many advantages, including reduced latency, and reduced likelihood of overloading of a particular node.

The computer-executable instructions further cause the processor to receive the movement behaviour data from each mobile device of the plurality of mobile devices, to aggregate the movement behaviour data, and then to analyse the aggregated movement behaviour data to identify atypical behaviour (for instance, by identifying features or patterns indicating atypical movement behaviours). The edge node may host and execute a machine learning model in order to carry out the analysis step. The edge node may comprise, or be in communication with, computer memory storing databases of characteristics related to connected mobile devices and the geographical area. The edge node may receive further data from the core network to be used within the model (including characteristics of the geographical region from the internet e.g. weather reports etc.).

The computer-executable instructions may further cause the processor to:
divide the geographical area in which the plurality of mobile devices is located into a plurality of segments, wherein the movement behaviour data received from each mobile device of the plurality of mobile devices is associated with a specified one of the plurality of segments;
and wherein the edge node configured to aggregate, analyse and report comprises the edge node configured to:
   aggregate, for each segment of the plurality of segments, the movement behaviour data received from each mobile device associated with the segment;
   analyse, for each segment of the plurality of segments, the aggregated movement behaviour data to identify any one or more atypical movement behaviour; and
   wherein if one or more atypical movement behaviour has been identified in any segment, then for each atypical movement behaviour identified report to a monitoring entity the atypical movement behaviour together with an identifier of a region of the geographical area coinciding with the segment in which said atypical movement behaviour was identified.

The computer-executable instructions may further cause the processor to assign a rate policy for each mobile device of the plurality of mobile devices, the movement behaviour data sent from each mobile device to the edge node according to the rate policy.

The computer-executable instructions causing the processor to analyse, for each segment of the plurality of segments, the aggregated movement behaviour data to identify any one or more atypical movement behaviour in the aggregated movement behaviour data of the segment may comprise the computer-executable instructions causing the processor to use a machine learning model to identify, for each segment of the plurality of segments, one or more patterns indicating atypical movement behaviour in the aggregated movement behaviour data. The machine learning model may identify and/or classify features or patterns in the aggregated movement behaviour data as atypical or typical movement behaviour.

Also described is a system for monitoring movement of vehicles or people, comprising the edge node described above and the plurality of mobile devices.

### Brief Description of the Figures

The present invention may be put into practice in a number of ways and embodiments will now be described by way of example only and with reference to the accompanying drawings, in which:
FIGURE 1 shows an example of a particular application of the presently disclosed method;
FIGURE 2 is a schematic representation of the edge node at which the disclosed method is implemented;
FIGURE 3 is a flow diagram showing the steps of a particular example of the disclosed method;
FIGURE 4 shows a further example of an application of the presently disclosed method;
FIGURE 5 shows a schematic representation of the logical elements of a machine learning model for implementation of the analysis of aggregated movement behaviour data; and
FIGURE 6 shows an example of the division of a monitored geographical area into segments.

It should be noted that the figures are illustrated for simplicity and are not necessarily drawn to scale. Like features are provided with the same reference numerals.

### Detailed Description of Specific Embodiments

The present disclosure relates to a method for monitoring movement of vehicles or people within a geographical area. More particularly, movement is monitored by monitoring the movement of mobile devices, each of which may be embedded in a vehicle or carried by a person. Where the mobile device is carried by a person, that person may be travelling in a vehicle, and so movement of the mobile device and its holder reflects movement of an associated vehicle.

The disclosed method takes place at an edge node of a core telecommunications network, the edge node configured to implement the method, wherein said edge node is for Multi-Access Edge Computing (MEC). MEC describes a concept developed by the European Telecommunications Standards Institute (ETSI) to provide user services and cloud computing services at the network edge, rather than at a central server of the core network. Relocating such services to the network edge moves them closer to the end user, thus reducing latency, and allows computational services to be managed locally without concern for traffic volumes and processing time across the network as a whole.

The present disclosure describes a system and method for monitoring movement of entities or objects (in particular, vehicles or people) within a monitored area and makes use of MEC. In particular, the present disclosure describes a method with makes use of data sent from a plurality of devices within a geographical area to an edge node of a telecommunications network. Each mobile device is associated with a user (person) and/or a vehicle. A processor at said edge node then undertakes analysis of the movement data. The solution establishes a network of edge computing nodes strategically placed within a telecommunications network provider infrastructure and serving as computation hubs capable of processing and analysing data in close proximity to the mobile devices from which data is received, reducing latency, improving responsiveness, and providing increased scalability.

We now describe a particular implementation of the disclosed method and edge node, which is used to monitor the movement of traffic (e.g. vehicles) through a traffic system. Nevertheless, it will be understood that in other implementations the method and edge node disclosed could be used to monitor movement of people (being the holder of, and associated with, a mobile device), for example monitoring the flow of people in a crowd, or through a train station or shopping mall.

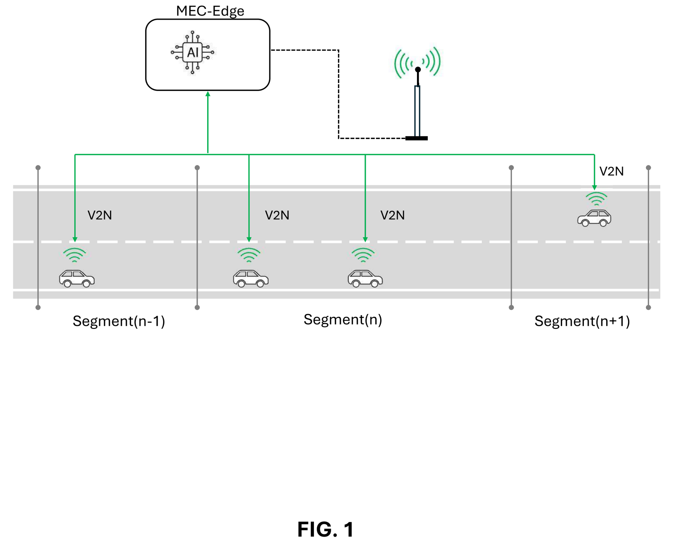

FIGURE 1 shows an example of a portion of a vehicle highway in which each vehicle is associated with a mobile device. Said mobile device may be part of the vehicle control infrastructure, or may be a mobile telephone (cell phone) belonging to an occupant of the vehicle. Each mobile device reports mobile behaviour data to the edge node via a wireless vehicle-to-network connection (V2N). The mobile behaviour data can be provided in a CAM message.

The mobile behaviour data is received at the edge node of a telecommunications network, as described above. The edge node comprises at least a processor and memory. The memory stores computer-executable instructions that, when executed by the processor, cause the server to implement the method described. Steps of the method may take place through execution of an artificial intelligence, Al (or more specifically, machine learning) model. This is discussed in more detail below.

After the movement behaviour data is received at the edge node from each mobile device, the data is aggregated. In other words, the data is grouped and/or averaged. As such, the aggregated movement behaviour data is representative of the movement of the group of mobile devices, rather than any individual mobile device.

Subsequently, the aggregated movement data is analysed to identify atypical movement behaviour. Atypical movement behaviour may be identified if the aggregate movement data shows features, trends or patterns of movement that do not fit with 'expected' features, trends or patterns of movement. Such expected features, trends or patterns of movement may be established in view of historical movement behaviour as well as information and classification of other factors that can affect movement of the users of the mobile devices (including environmental factors, known events or maintenance events at a location, time of day etc.). The features, trends or patterns indicating atypical movement data may be identified numerically in the aggregate movement data, or as a result of an unexpected lack of aggregate movement data at certain locations within the geographical area.

As shown in FIGURE 1, the geographical area in which the mobile devices are located may be divided into segments. In the example of FIGURE 1, the geographical area is a portion of a road or highway, and the road or highway is divided into chunks or segments with different length *(segment (n-1), segment (n)* and *segment* (*n*+1))*.* As described below in more detail, the number and size of segments will depend on a variety of considerations, and may be allocated as part of the method.

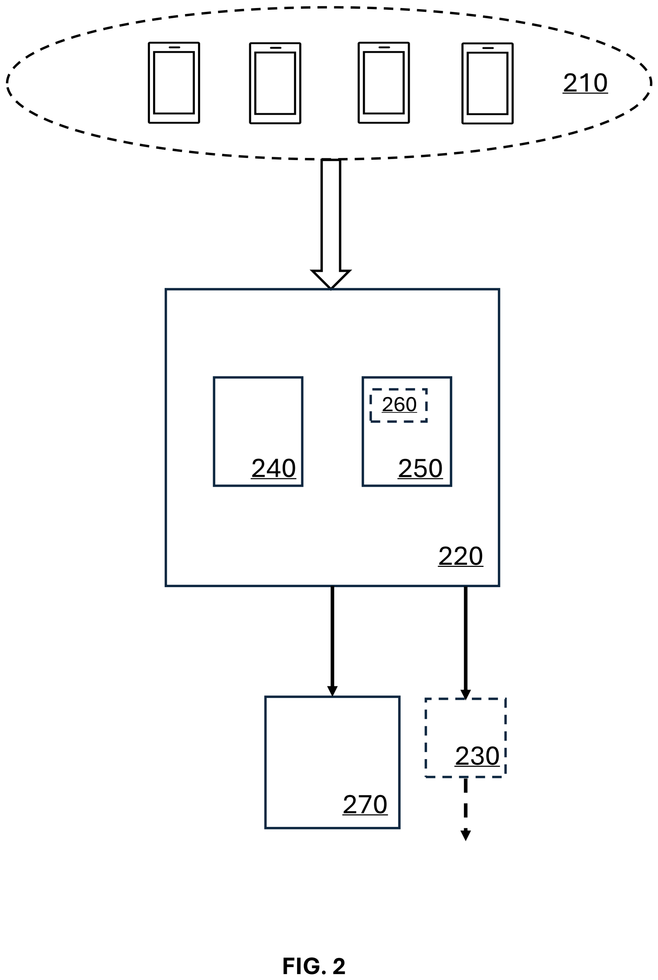

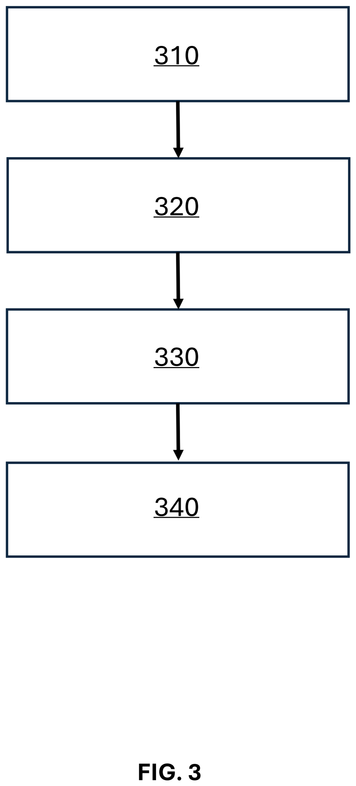

The method for monitoring of movement of vehicles or people within a geographical area is now discussed in greater detail with reference to FIGURES 2 and 3. FIGURE 2 shows apparatus elements of the system in which the disclosed method is implemented and FIGURE 3 shows a flow diagram illustrating the main steps of an example of the method.

Referring to FIGURE 2, an edge node 220 for implementation of multi-access edge computing is provided as part of a telecommunication system. The edge node can send and receive communications from a plurality of connected mobile devices 210 (including mobile or cell phones, tablets, internet of things devices, or other data connected devices). The edge node 220 acts as a gateway to a core network 230, though which communications from the edge node 220 can be transmitted to its intended destination.

The edge node 220 comprises a processor 240 and memory 250. The memory 250 stores computer executable instructions, which may be executed at the processor 240 in order to cause the processor to undertake the steps of the method as discussed below with reference to FIGURE 3. The memory 250 may also store other information, including a database 260 of information or characteristics in relation to the locations or geographical regions within the geographical area to be monitored.

A monitoring entity 270 is shown in FIGURE 2 in communication with the edge node 220. It will be understood that the monitoring entity 270 may instead be part of, or in communication with, the core network 230 or be part of the edge node 220. The monitoring entity is a system or a person arranged to receive reports of atypical behaviour generated according to the disclosed method. In some cases, the monitoring entity will take action based on the reported atypical behaviour. The action may be any action to mitigate, overcome or prevent the identified atypical movement behaviour. In some cases, selection and initiation of such an action will be automated at the monitoring entity.

Looking to FIGURE 3, in a first step 310 the method comprises dividing, at the edge node, the geographical area to be monitored in which the plurality of mobile devices is located into a plurality of segments. In other words, the geographical area to be monitored is split into segments or chunks, such that every location within the geographical area to be monitored is assigned to a segment. When movement behaviour data is received at the edge node from each mobile device of the plurality of mobile devices, the movement behaviour data is associated with a specified one of the plurality of segments. For example, each set of movement behaviour data from the mobile device may indicate the location of the sending mobile device, and then on the basis of this location the edge node will group the received movement data into an appropriate 'bin' allocated for data from a given segment of the monitored geographical area. Alternatively, each set of movement behaviour data from the mobile device may indicate a segment identifier.

In a second step (320), the edge node aggregates the movement behaviour data received at the edge node and associated with each segment. In other words, the movement behaviour data in each 'bin' associated with a segment is aggregated. It will be understood that the movement behaviour data may be a set of data values for measured movement parameters from each mobile device. The set of data values from different mobile devices might include different combinations of movement parameters from a group of possible movement parameters, although ideally at least certain specific movement parameters would be provided from each mobile device. For instance, where the method is used to monitor a vehicle traffic system (such as the mobile devices associated with the vehicles within the example of FIGURE 1), the measured movement parameters (comprised within the movement behaviour data) provided from each mobile device may include speed, location, acceleration, direction, braking force of the vehicle and steering column rotation. The aggregation of movement behaviour data by the edge node for each segment requires aggregation of each movement parameter within the movement behaviour data received from the mobile devices within a given segment of the monitored geographical area.

In a third step (330), the edge node analyses, for each segment of the plurality of segments, the aggregated movement behaviour data to identify any one or more atypical movement behaviour. In the presently described example, the analysis employs a machine learning model to identify patterns in the aggregated movement behaviour data for each segment, and to classify these patterns as atypical or typical behaviour. This is considered in more detail below. Here, the analysis also takes into account a set of characteristics for regions of the geographical area coinciding with or overlapping with the segment, as well as (or alternatively) taking into account aggregated movement behaviour data of one or more segments adjoining the segment to identify any one or more atypical movement behaviour.

In particular, analysis to identify atypical movement behaviour takes into account the aggregated movement behaviour data for a segment, but also certain other parameters or characteristics for that segment. The characteristics may include, as an example, one or more of the estimated visibility in the segment, the presence or absence of precipitation in the segment, the presence or absence of (pre-notified) maintenance work in the segment, speed restrictions in the segment, a historical average speed in the segment, identification of previous atypical movement behaviour in the segment, a predetermined risk profile for atypical behaviour in the segment, a density of mobile devices in the segment, and/or a presence or absence of a prearranged event in the segment. The characteristics may be stored at a database at the edge node and updated dynamically as each characteristic changes over time, either though external inputs (for instance, via the network from the monitoring entity, or from the internet) or through inputs from analysis of the movement behaviour data. Such characteristics can indicate that a movement behaviour pattern that would otherwise be considered atypical (for instance, in comparison to historical movement behaviour data for the same locations) is, temporarily, considered typical. For instance, if the set of characteristics can indicate that heavy rain is falling at a location within a segment, and so slower movement of traffic through the segment (compared to a historical average) would not be atypical.

In a fourth step (340), if one or more atypical movement behaviour has been identified in any segment, then the edge node reports to the monitoring entity the atypical movement behaviour together with an identifier of a region of the geographical area coinciding with the segment in which said atypical movement behaviour was identified. In other words, the edge node reports the atypical behaviour to a monitoring entity or agent together with an indication of the segment (or the region of the geographical area coinciding with the segment, such as a location or map coordinates). The monitoring entity or agent can then take an action to mitigate the atypical behaviour or remove a cause of the atypical behaviour.

It will be understood that the first to fourth steps (310 to 340) provide an idealistic description of a single iteration of a machine learning model used to identify atypical movement behaviour. However, according to the nature of such a model the described monitoring of the geographical area requires repeated or continous iterations, which may update and improve the model used, as well as respond to and cause changes in parameters within the model. Each iteration may use different inputs (i.e. different movement behaviour data from the mobile devices) but may also take into account a reallocation of the segments covering a monitored geographical area, as well as a changing set of characteristics (i.e. changing environmental parameters, such as weather), and an adaptation of classification to the individual mobile devices.

In view of the nature of the machine learning model, the iteration of the method cannot be considered to take place strictly periodically, but is responsive to the output of the analysis. This means that redivision of the geographical area into segments (of a different size), changing a rate policy determining the frequency at which mobile devices provide movement behaviour data to the edge node (discussed further below), as well as the frequency of the analysis of the aggregated movement behaviour data is determined based on the outcome of earlier analysis of the movement behaviour data and the identification or otherwise of atypical movement behaviours. As such, the use of a machine learning model provides a dynamic analysis, that can respond to busier periods within the monitored geographical area (for instance, traffic during rush hour), as well as less busy periods (during the night, for instance).

In an example, the rate of iteration of the method may be adjusted in view of external factors, such as weather conditions or planned work in the area in the monitored geographical area. In another example, movement behaviour data incoming to the edge node could be placed in a queue for each segment, with the edge node either waiting until a certain number of sets of data are in the queue before analysing them all, or the available data for each segment could be analysed at regular intervals.

Considering the steps of the method of FIGURE 3 with particular regard to the illustrative example of FIGURE 1, movement behaviour data is received at the edge node over the V2X network from the mobile device associated with each vehicle. The edge node then aggregates the movement behaviour data received from mobile devices associated with *segment(n-1),* separately aggregates the movement behaviour data received from mobile devices associated with *segment*(*n*), and separately aggregates the movement behaviour data received from mobile devices associated with *segment*(*n*+1)*.* The edge node analyses the aggregated movement data in each segment separately, taking into account a set of parameters relevant to locations within that segment. In the example of FIGURE 1, the machine learning model may identify that the aggregate movement data shows a pattern of deceleration for mobile devices in *segment(n),* but then further determines this is typical for the region of the geographical area coinciding with *segment*(*n*). As such, this behaviour would not be classified as atypical.

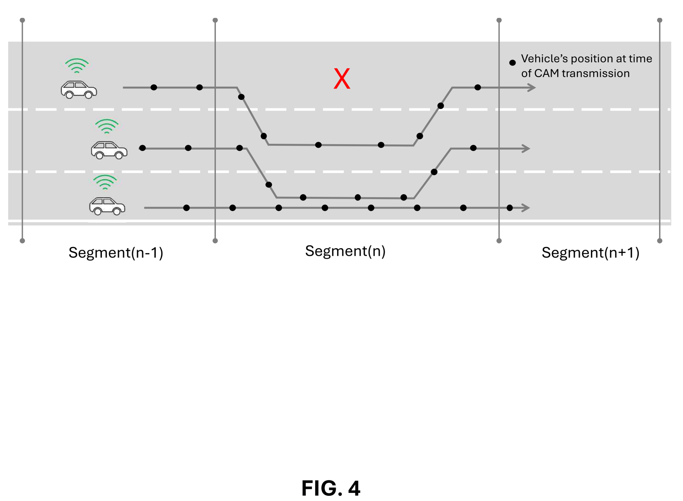

FIGURE 4 shows another illustrative example in which a number of vehicles are present on a portion of a vehicle highway, and in which each vehicle is associated with a mobile device. As before, the highway is divided into segments *(segment(n-1), segment(n), segment*(*n*+1)). Once again, movement behaviour data is received at the edge node over the V2X network from the mobile device associated with each vehicle. The edge node then separately aggregates the movement behaviour data received from mobile devices associated with *segment(n-1), segment(n),* and *segment*(*n*+1). Subsequently, the edge node analyses the aggregated movement data in each segment, although taking into account a set of parameters relevant to locations within that segment. The analysis may further take into account the aggregated movement behaviour data for adjoining segments *(segment(n-*1) and *segment*(*n*+1))*,* in order to identify a pattern in the movement behaviour relevant to the given segment (here, *segment(n)).*

In the example of FIGURE 4, the analysis may identify that there is a lack of data within the aggregate movement behaviour data for locations in the left-hand lane (uppermost in FIGURE 4) of *segment (n)* of the highway. This is an unexpected feature of the aggregate data and may indicate a blockage in this lane of the highway which vehicles (and their associated mobile device) have moved out of the way to avoid. In view of this feature identified by the machine learning model, the behaviour for the segment is classified as 'atypical'. The importance of using aggregate movement behaviour data is demonstrated by this example, as the lack of data from any one mobile device in the left-hand lane of the highway in *segment (n)* of FIGURE 4 would not be remarkable. However, the lack of data from any mobile device at all in the left-hand lane of the highway in *segment (n)* is considered to be unexpected.

The atypical behaviour and an identifier of a region of the geographical area coinciding with the segment in which said atypical movement behaviour was identified can then reported to a monitoring entity. Alternatively, identification of a feature indicating atypical movement behaviour could prompt further analysis of the aggregated movement data in this segment, to confirm or disregard the apparent atypical movement behaviour. For instance, in the example of FIGURE 4, the aggregate movement data shows a deceleration for mobile devices in *segment(n),* and that this deceleration is greater than for the example of FIGURE 1. Moreover, the analysis may identify that the aggregate movement data shows a feature in movement behaviour data related to the trajectory of the mobile devices through the segment, in particular that the mobile devices in *segment(n)* may be found to move towards the outermost lane of the highway for a portion of the segment. In view of at least these two additional features, the behaviour for the segment would be classified as 'atypical'.

Where atypical behaviour is identified, it can be reported to a monitoring entity together with an identifier of the region of the geographical area coinciding with the segment in which said atypical movement behaviour was identified. The monitoring entity (e.g. a human supervisor, or an automated monitoring system) can subsequently take action to remedy or mitigate the cause of the atypical behaviour. In some cases, the cause of the atypical behaviour may be suggested by or extrapolated from the type of atypical behaviour (for instance, the behaviour shown in *segment(n)* in the example of FIGURE 4 could indicate a blockage (perhaps an accident or fallen load) in the inner lane of the highway). In these cases, the monitoring entity may take immediate (automated) action in view of this, for instance by initiating the sending of a maintenance team or emergency services team and/or remotely reducing the speed limit shown on electronic signs at the highway. In other cases, the received indication of atypical behaviour by the monitoring entity may instigate additional monitoring, or use of other measures (i.e. use of closed-circuit television cameras trained on the highway) to investigate further (perhaps by a human operator).

In a further, optional step, upon identification and reporting of atypical movement behaviour, the edge node can be configured to confirm the presence of atypical movement behaviour by obtaining further movement behaviour data from one or more specific mobile devices within the segment in which the atypical movement behaviour has been identified. This further movement behaviour data can be analysed to confirm the presence of atypical movement behaviour and to more precisely locate its position. In the case of the monitoring of vehicles associated with each mobile device, this step may use specific CAMS properties for example (but not limited to) velocity or steering angle to confirm the presence of a suspected cause of atypical movement behaviour (such as a blockage on the highway). This type of additional and targeted analysis is computationally intensive, but would be useful to confirm the classification of typical behaviour from the initial analysis.

The analysis of the aggregate movement behaviour data preferably employs a machine learning model. It will be understood that a machine learning model is implemented via a set of computer-executable instructions saved within the memory of the edge node, and which can be executed on the processor of the edge node in order to cause the processor to run the model. Machine learning models are useful for recognising certain types of patterns or features within data sets or for classifying certain sets of data. In the method of the present disclosure the machine learning model is used to recognise features within input data for a given segment and classify (i.e. as typical or atypical) the data accordingly. The use of aggregated data to perform the analysis of the machine learning model acts to reduce the error in the classification.

Initially, a machine learning model must be trained on a known data set with known outcomes, wherein the training adapts the computer algorithm behind the model in order to better predict the known outcomes from the known data. Once trained, the model can be applied on previously unseen data to identify patterns based on its training. In the present application, the machine learning model may be trained using historical movement behaviour data from mobile devices in the same geographical area, or for mobile devices in a representative geographical area, in which typical and atypical movement behaviour has been observed and classified. In this way the disclosed machine learning model can learn that something initially appearing atypical could be 'temporarily' classified as typical. For example, road repairs causing slow moving traffic are a temporarily typical condition and not due to an emergency (e.g., an incident) and should not be reported as such. The machine learning model dynamically learns that in a segment containing road repairs and its preceding and subsequent segment there is temporarily a different typical movement behaviour.

The machine learning model for analysis of the aggregated movement behaviour data can be considered logically to comprise three Al-based modules. The three Al-based modules act in collaboration to adapt inputs to the movement behaviour data analysis to collectively identify atypical movement behaviour.

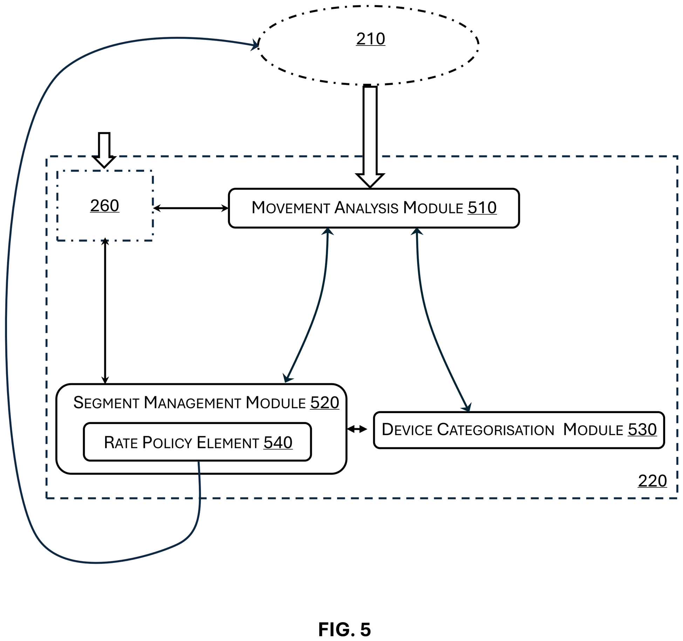

FIGURE 5 shows the logical structure of the machine learning model, including an Al-based movement analysis module 510, an Al-based segment management module 520, and an Al-based device categorisation module 530. The movement analysis module 510 performs the basic functions of the method described above. In particular, the movement analysis module 510 receives the movement behaviour data from the mobile devices, aggregates said data for each segment, and then analyses the aggregated data to identify atypical behaviour. Atypical behaviour is reported then to a monitoring entity, as discussed above. However, in addition, the results of the analysis are fed back to be used in a categorisation of certain mobile devices (by the device categorisation module 530) and used within the step of dividing the geographical area into segments (by the segment management module 520). It will be understood that the Al-based logical modules of the machine learning model continually and dynamically adapt through each iteration and based upon inputs form other modules.

Considering the Al-based movement analysis module 510 in more detail, the analysis may consider aggregated movement behaviour data from adjacent segments of the geographical area being monitored. Furthermore, the movement analysis module 510 may also take into account a set of characteristics (including one or more measured or obtained parameters) representative of a given segment. These characteristics may be retrieved by the movement analysis module 510 from a database, such as a database 260 at the edge node or an external database in communication with the edge node. Said characteristics may include various environmental factors (including but not limited to visibility in meters, raining condition (present, absent), road repairs (men at work), known queue (estimated wait time), average speed), as well as the time or date at which the movement behaviour data was recorded at a mobile device, or information on known or preplanned events in the region of the geographical area associated with the segment. The values of these parameters change over time (by measurement at sensors at a relevant location, or by obtaining information from a supervisor or a network source e.g. the internet), and will be updated in the database from which they are retrieved by the movement analysis module 510. As such the resulting classification of typical or atypical behaviour for each segment by the movement analysis module 510 is dynamic and continually updated by external input (updating the set of characteristics) as well as by provision of new movement behaviour data from the mobile devices themselves.

Inputs to the movement analysis module 510 are received from the device categorisation module 530 and the segment management module 520, as discussed below, as well as the set of characteristics stored or obtained by the edge node (for instance, retrieved from a database) and the movement behaviour data from the mobile devices. The output to the movement analysis module 510 would be a report or alert of the atypical behaviour, together with an indication of the location of the atypical behaviour.

The Al-based device categorisation module 530 acts to categorise an individual mobile device based on its role within a particular segment. This is particularly helpful where the movement of certain mobile devices can be considered representative of the movement behaviour of a group of mobile devices, and may be an especially powerful tool when the dynamics of the movement are more predictable and well understood (for instance, if the method is applied to monitor a queue).

In one example, said role may be, for instance, identification of the mobile device being associated with a leading person or vehicle in a queue, being associated with a final person or vehicle in a queue, being associated with a person or vehicle in the 'body' of a queue, or being associated with a 'typical' person or vehicle. This information can then be fed back into the analysis of the aggregated movement behaviour data at the movement analysis module to make the analysis more efficient and therefore increase capacity at the edge. The information can also be provided to the segment management module to set rate policy, in order to adapt the frequency that movement behaviour data is sent from a mobile device (discussed in more detail below).

The Al-based segment management module 520 acts to dynamically divide the monitored geographical area into segments, taking into account the set of parameters characterising regions of the geographical area. The segment management module 520 may continuously monitor and redivide the geographical area into segments and adjust the segment size. The geographical area can be reallocated and redivided into segments over different iterations of the machine learning model. The size of each segment need not be the same for the whole geographical area, and the segment management module 520 acts to apportion the segments with an appropriate size in order that regions of interest (that are expected to show, or have been shown, to comprise mobile devices demonstrating atypical movement behaviour) can be analysed in more detail. In this way, the segment management module 520 accepts input from the movement analysis module 510 (which provides information on patterns in the aggregated movement behaviour and identified atypical behaviour), the device categorisation module 530 (providing information on the categorisation of specific mobile devices within a region of the geographical area) as well as a set of characteristics for said regions of the geographical area coinciding with or overlapping the proposed segment. This may be the same set of characteristics discussed above and used by the movement analysis module, and may be retrieved from the database 260 or record stored within or accessible to the edge node. The set of characteristics may include information such as the density of mobile devices in a region of the geographical area, as well as external environmental factors for the region (such as time of day, temperature, visibility, weather). Use of the set of characteristics may be considered 'classification' or 'categorisation' of the segments.

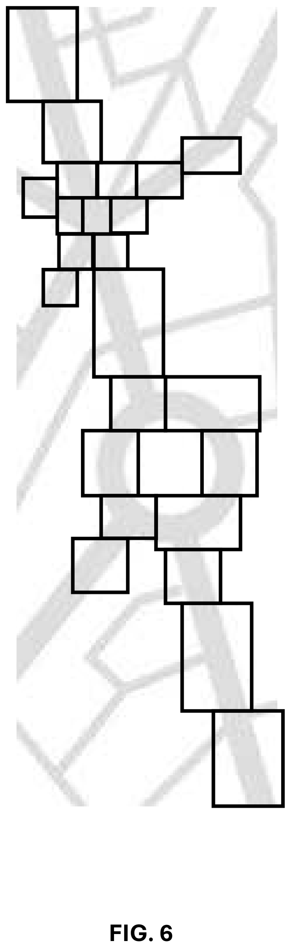

FIGURE 6 shows an example of the segmentation applied during a single interaction of the machine learning model by the segment management module 520. Here, the geographical area to be monitored covers a main roadway and some smaller roads that connect to the main roadway. It can be seen that, in this example, the segment management module has allocated certain areas with segments of smaller size (for example, at the interaction or junction of three different roads with the main road), and other regions are allocated with segments of relatively larger size (in regions with more straightforward traffic flow). The size of the segment determines the 'sampling' of an area, and so allows more detailed analysis of certain areas compared to others. In the example of FIGURE 6, the segment size may be smaller at the junction intersection in view of a parameter in the set of characteristics for that region indicating that atypical movement behaviour is more probable (i.e. the location has a higher 'risk factor' for atypical behaviour), together with an output from a previous iteration of the movement management module that atypical movement behaviour is indicated.

As noted above, the size and allocations of the segments to the geographical area to be monitored are determined by the segment management module 520 and based on the output from the movement analysis module 510 (i.e. identification of atypical behaviour), the output from the device categorisation module 530 (i.e. classifying or categorising the role of mobile devices within a given region of the geographical area coinciding with a segment) as well as the set of characteristics of the region of the geographical area coinciding with a segment (including environment factors, date, time, density of mobile devices etc). Based on these inputs, the Al-based segment management module 520 segments the geographical area to be monitored in order to provide appropriate 'sampling' of different regions. Areas where atypical behaviour has been observed in the past, for example, or in which a mobile device categorised as a 'lead vehicle in a queue' for instance, or in which ice is recorded on the road, may be monitored in greater detail by division into smaller and a greater number of segments. Conversely, areas where movement behaviour of mobile devices is considered as typical in the output from the movement analysis module 510, and no adverse or unusual features are indicated in the characteristics of the segment or the output from the device categorisation module 530, then this segment may be monitored more broadly by being covered by a larger segment size. In this way, the computing (i.e. processor) power at the edge node is used more efficiently and effectively to focus on the regions of the monitored geographical behaviour in which atypical behaviour is occurring or is more likely to occur.

It will be understood that various factors could influence the size of the segment, for example, mobile device density, external events like weather conditions or road maintenance, and known events like a sports event in the geographical area. The division into segments is a dynamic concept, wherein the size of the segment is dynamically changed depending on the analysis of aggregate movement behaviour as well as other "external" inputs (such as weather conditions, planned road repairs, etc). In one example where the method is used to monitor vehicle traffic, in the case of an incident causing a queue, then the length of road within a segment may be adjusted to follow the length of the queue.

The segment management module 520 of FIGURE 5 also comprises a rate policy element 540. The rate policy element 540 acts to set the rate policy for each mobile device within a segment. The rate policy can be sent from the edge node (i.e. from the rate policy element 540 of the segment management module 520) to each mobile device, in order to be implemented at each mobile device. The rate policy determines the frequency with which a mobile device reports movement behaviour data to the edge node (and more specifically is correlated with the frequency with which new movement behaviour data is received at the movement analysis module 510 from the mobile devices). The rate policy may be set by the rate policy element 540 of the segment management module 520 in view of the inputs to the segment management module 520 (being the identification of atypical behaviour from the movement analysis module 510, device categorisation from the device classification module 530, and the set of characteristics of the segment such as stored in the database 260). The rate policy can be adaptive so as to be set for mobile devices approaching or entering a segment.

As noted above, the device categorisation received from the device categorisation module 530 may be used to set rate policies. For instance, in the specific example where the disclosed method is applied to monitoring of vehicle traffic on a highway, the rate of return of movement behaviour data may be set to zero for all mobile devices associated with vehicles in the queue, except for the mobile device categorised as being associated with a lead vehicle in the queue. In this way, the movement behaviour data received from the mobile device categorised as being associated with a lead vehicle in the queue can be analysed and assumed to be representative of the congested traffic. For completeness, the device categorisation module may also categorise a mobile device associated with a vehicle at the tail (last vehicle) of the queue, to allow monitoring of the queue's evolution. As the method is trained to be aware of the queue conditions and the presence of the lead vehicle, it can interpret 'missing' data from the mobile devices associated with other vehicles in the body of the queue.

Categorisation of the mobile devices by roles in a known and predictable situation such as a queue, allows the method to avoid receiving and processing movement behaviour data from mobile devices associated with all vehicles in the queue between the lead and tail vehicle. This substantially reduces the required resources in the MEC (Multi-access Edge Computing) for effective monitoring of the queue. In an example, by implementing the device categorisation and rate policy in this way, in a 3km queue of approximately 600 vehicles then the edge node would only need to manage data from the mobile devices associated with two vehicles (head and tail), and yet still be able to sufficiently monitor the queue characteristics overall.

Various benefits are apparent from the disclosed method and system for monitoring movement of vehicles or people within a geographical area. In particular:
- The method for monitoring movement of vehicles or people within a geographical area is carried out at the edge node of a cellular network. This has the benefit of providing lower latency, as well as reducing the amount of data to be processed at a single network element, thereby reducing costs.
- The method aggregates data, rather than monitoring movement of an individual mobile device. This provides information on the movement of a group (i.e. the population dynamic), and avoids false identification of atypical behaviour on the basis of only an individual or a few mobile devices.
- The method for monitoring movement of vehicles or people within a geographical area 'segments' or 'clusterises' areas of the monitored geographical area (for instance, it segments the roadway to be monitored). This allows the amount of data collected (i.e. frequency of data collection & area represented) to be optimised according to the conditions and likelihood of atypical behaviour in each segment.
- The method for monitoring movement of vehicles or people within a geographical area is dynamic method, so that various parameters in the method (i.e., the segment size and rate of return of movement behaviour to the edge node) vary according to the input conditions and their dynamics.
- The method categorises the role of mobile devices from which data is collected, in order to adjust the rate policy determining how often data is sent from a mobile device associated with said vehicle. This allows the amount of data collected to be optimised according to the status and role of a mobile deice within a particular segment.

With respect to the use of the method for monitoring movement of vehicles or people within a geographical area for use in monitoring vehicle traffic, the proposed solution utilizes edge computing capabilities, specifically Multi-Access Edge Computing (MEC), to implement complex C-ITS-based applications by leveraging high-performing computational capacity at the edge. While each Cooperative Awareness Message (CAM) provides information about a single vehicle, a value of the method lies in aggregating messages from multiple vehicles. By employing artificial intelligence (AI) algorithms, the presently disclosed solution enables centralized detection of obstacles on the highway, enhances the efficiency of Vehicle-to-Network (V2N) messages, and minimizes the usage of the computational capacity at the edge. The disclosed method (and in particular the machine learning model logically represented in the modules of FIGURE 5) collectively enable the intelligent management of road segments and enhance the effectiveness of C-ITS applications.

It will be understood that, although FIGURE 3 describes an example of the method including a first step of dividing the geographical area into segments, this is not essential to the implementation of the described method. Nevertheless, it might provide benefits for improved granularity and precision in identifying atypical movement behaviours.

Although in the example of the method described with respect to FIGURES 1 to 6 (relating to a traffic system) the segments are represented as "chunks" of a highway or area, it will be understood that the segments may take the form of circles or ovals, where two consecutive segments may be two concentric circles or ovals. This may especially be the case in alternative implementations of the method, for instance to monitor crowd density in a building or arena.

Although implementation of the described method through machine learning may provide the greatest benefits, it will be understood that an implementation the method could also be fulfilled via classical computing methods. In this case, the analysis step would comprise comparing, at the edge node, the aggregated movement behaviour data of said segment to established typical movement behaviour of said segment, wherein if a difference is determined in the aggregated movement behaviour of said segment than compared to the established typical movement behaviour of said segment, then an atypical movement behaviour is identified in said segment; and/or comparing, at the edge node, the aggregated movement behaviour data of said segment to aggregated movement behaviour data for segments that are geographically adjoined to said segments, wherein if the aggregated movement behaviour of said segment is significantly different than compared to the aggregated movement behaviour data for segments that are geographically adjoined to said segments, then an atypical movement behaviour is identified in said segment.

The method could then further comprise comparing the aggregated movement behaviour data to established typical movement behaviour comprises comparing an aggregate of each parameter within the movement behaviour data with an established value for the same parameter within the predetermined typical movement data. For instance, if the aggregated movement behaviour data contains parameters for speed and for direction, then each of these parameters are compared to an established value for speed and for direction respectively.

In other words, the aggregated movement behaviour data can be compared to thresholds for different parameters (the thresholds established though historical movement behaviour data). If the aggregated movement behaviour data exceeds (or in some cases, falls below) said threshold, then the data could be assumed to be atypical.

Although examples according to the disclosure have been described with reference to specific illustrative examples, other approaches according to the disclosure may be used. Certain features may be omitted or substituted, for example as indicated herein. Each feature disclosed in this specification, unless stated otherwise, may be replaced by alternative features serving the same, equivalent or similar purpose. Thus, unless stated otherwise, each feature disclosed is one example only of a generic series of equivalent or similar features.

In this detailed description of the various examples and/or embodiments, for the purposes of explanation, numerous specific details are set forth to provide a thorough understanding of the examples and/or embodiments disclosed. One skilled in the art will appreciate, however, that these various examples and/or embodiments may be practiced with or without these specific details. Furthermore, one skilled in the art can readily appreciate that the specific sequences in which methods are presented and performed are illustrative and it is contemplated that the sequences can be varied and still remain within the scope of the various examples and/or embodiments disclosed herein.

As used herein, including in the claims, unless the context indicates otherwise, singular forms of terms are to be construed as including the plural form and vice versa. For instance, unless the context indicates otherwise, a singular reference herein including in the claims, such as "a" or "an" means "one or more". Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B" is true, or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the disclosure. That is, the terms are relative such that an element termed a "first" element or position may instead be termed a "second" element or position and an element termed a "second" element or position may instead be considered a "first" element or position.
Any steps described in this specification may be performed in any order or simultaneously unless stated or the context requires otherwise. Moreover, where a step is described as being performed after another step, this does not preclude intervening steps being performed.

It is also to be understood that, for any given component, example or embodiment described herein, any of the possible candidates or alternatives listed for that component may generally be used individually or in combination with one another, unless implicitly or explicitly understood or stated otherwise. It will be understood that any list of such candidates or alternatives is merely illustrative and not limiting, unless implicitly or explicitly understood or stated otherwise.

## Claims

1. A method for monitoring movement of vehicles or people within a geographical area, comprising:
aggregating, at an edge node of a cellular network, movement behaviour data received at the edge node from each mobile device of a plurality of mobile devices located within the geographical area, each mobile device being associated with a vehicle and/or a person, the edge node for implementation of multi-access edge computing (MEC);
analysing, at the edge node, the aggregated movement behaviour data to identify any one or more atypical movement behaviour;
if one or more atypical movement behaviour is identified, then reporting, by the edge node to a monitoring entity, the one or more atypical movement behaviour.

2. The method of claim 1, wherein prior to the step of aggregating, the method further comprises:
dividing, at the edge node, the geographical area in which the plurality of mobile devices is located into a plurality of segments, wherein the movement behaviour data received at the edge node from each mobile device of the plurality of mobile devices is associated with a specified one of the plurality of segments;
and wherein the aggregating, analysing and reporting steps comprise:
aggregating, at the edge node for each segment of the plurality of segments, the movement behaviour data received from each mobile device associated with the segment;
analysing, at the edge node for each segment of the plurality of segments, the aggregated movement behaviour data to identify any one or more atypical movement behaviour;
if one or more atypical movement behaviour has been identified in any segment, then for each atypical behaviour identified reporting by the edge node to a monitoring entity the atypical movement behaviour together with an identifier of a region of the geographical area coinciding with the segment in which said atypical movement behaviour was identified.

3. The method of claim 2, wherein analysing, at the edge node for each segment of the plurality of segments, the aggregated movement behaviour data to identify any one or more atypical movement behaviour further comprises analysing, at the edge node for each segment of the plurality of segments, the aggregated movement behaviour data together with a set of characteristics for regions of the geographical area coinciding with the segment and/or aggregated movement behaviour data of one or more segments adjoining the segment to identify any one or more atypical movement behaviour.

4. The method of any one of claims 2 to 3, wherein the method further comprises:
repeating the dividing, aggregating, analysing and reporting steps.

5. The method of claim 4, wherein the size of each segment in the plurality of segments is determined based on previous analysis of the aggregated movement behaviour data to identify any one or more atypical movement behaviour in regions of the geographical area coinciding with or overlapping a given segment and a set of characteristics for said regions of the geographical area coinciding with or overlapping the given segment.

6. The method of claim 3 or claim 5, wherein the set of characteristics of a region comprises one or more parameter selected from a group comprising:
estimated visibility;
presence or absence of precipitation;
temperature;
date;
time of day;
presence or absence of maintenance work;
speed restrictions;
a historical average speed;
identification of previous atypical movement behaviour in the region;
a predetermined risk profile for atypical behaviour in the region;
a density of mobile devices;
presence or absence of a prearranged event.

7. The method of any preceding claim, wherein the movement behaviour data is received at the edge node from each mobile device of the plurality of mobile devices according to a rate policy, and wherein the method further comprises:
assigning, by the edge node, a rate policy for each mobile device of the plurality of mobile devices.

8. The method of claim 7 when dependent on any one of claims 2 to 6, wherein assigning the rate policy for each mobile device of the plurality of mobile devices is based on one or more of:
a categorisation of said mobile device; and/or
attributes of the segment in which said mobile device is located.

9. The method of claim 8, wherein prior to assigning the rate policy, the method further comprises:
assigning, by the edge node, the categorisation to each mobile device of the plurality of mobile devices based on previous analysis of the aggregated movement behaviour data to identify any one or more atypical movement behaviour in the segment in which the mobile device is located.

10. The method of any preceding claim, wherein analysing the aggregated movement behaviour data to identify any one or more atypical movement behaviour comprises:
using a machine learning model to identify atypical movement behaviour in the aggregated movement behaviour data.

11. The method of claim 10, wherein the machine learning model is trained to identify patterns in the aggregated movement behaviour data indicating atypical movement behaviour based on a set of characteristics of one or more region of the geographical area and historical movement behaviour data obtained from mobile devices located in the one or more region.

12. An edge node for implementation of multi-access edge computing, MEC, in a cellular network, the edge node comprising:
a processor; and
memory storing computer-executable instructions that, when executed by the processor, cause the server to:
aggregate movement behaviour data received from each mobile device of a plurality of mobile devices located within a geographical area, each mobile device being associated with a vehicle and/or a person within a traffic system;
analyse the aggregated movement behaviour data to identify any one or more atypical movement behaviour; and
if one or more atypical movement behaviour is identified, report, to a monitoring entity, the one or more atypical movement behaviour

13. The edge node of claim 12 wherein the computer-executable instructions further cause the processor to:
divide the geographical area in which the plurality of mobile devices is located into a plurality of segments, wherein the movement behaviour data received from each mobile device of the plurality of mobile devices is associated with a specified one of the plurality of segments;
and wherein the edge node configured to aggregate, analyse and report comprises the edge node configured to:
aggregate, for each segment of the plurality of segments, the movement behaviour data received from each mobile device associated with the segment;
analyse, for each segment of the plurality of segments, the aggregated movement behaviour data to identify any one or more atypical movement behaviour; and
wherein if one or more atypical movement behaviour has been identified in any segment, then for each atypical movement behaviour identified report to a monitoring entity the atypical movement behaviour together with an identifier of a region of the geographical area coinciding with the segment in which said atypical movement behaviour was identified.

14. The edge node of any one of claims 12 to 13, wherein the computer-executable instructions further cause the processor to assign a rate policy for each mobile device of the plurality of mobile devices, the movement behaviour data sent from each mobile device to the edge node according to the rate policy.

15. The edge node of any one of claims 12 to 14, wherein the computer-executable instructions causing the processor to analyse, for each segment of the plurality of segments, the aggregated movement behaviour data to identify any one or more atypical movement behaviour in the aggregated movement behaviour data of the segment comprises the computer-executable instructions causing the processor to;
use a machine learning model to identify, for each segment of the plurality of segments, one or more atypical movement behaviour in the aggregated movement behaviour data.
